# EUROPÄISCHE PATENTSCHRIFT

(11) **EP 0 735 063 B1**
(45) Veröffentlichungstag und Bekanntmachung des Hinweises auf die Patenterteilung: **02.06.1999**
(21) Anmeldenummer: 96104565.5
(22) Anmeldetag: 22.03.1996
(51) Int. Cl.: C08F 265/04, C08L 51/00

(54) **Teilchenförmige Pfropfpolymerisate und diese enthaltende thermoplastische Formmassen mit verbesserter Kältezähigkeit**
Graft polymer particles, molding thereof with better low temperature toughness
Polymères greffés sous forme de particules, masses à mouler les contenant ayant une meilleure ténacité à froid

(30) Priorität: 29.03.1995 DE 19511492
(43) Veröffentlichungstag der Anmeldung: 02.10.1996
(73) Patentinhaber: BASF Aktiengesellschaft, 67063 Ludwigshafen (DE)
(72) Erfinder: Fischer, Wolfgang, Dr., 67067 Ludwigshafen (DE); McKee, Graham Edmund, Dr., 67433 Neustadt (DE)

(56) Entgegenhaltungen:
- EP-A- 0 698 644
- EP-A- 0 728 779
- EP-A- 0 736 573
- WO-A-94/05716
- US-A- 4 535 010
- US-A- 4 564 653
- US-A- 4 634 734
- US-A- 5 286 801

## Beschreibung

Die vorliegende Erfindung betrifft thermoplastische Formmassen, enthaltend
a₁) 30 bis 90 Gew.-%, bezogen auf A), einer Pfropfgrundlage mit einer Glasübergangstemperatur von weniger als 0°C auf der Basis von
   a₁₁) 50 bis 99,94 Gew.-%, bezogen auf a₁), mindestens eines Alkylacrylats mit 1 bis 30 C-Atomen im Alkylrest,
   a₁₂) 0 bis 49,9 Gew.-%, bezogen auf a₁), eines weiteren, mit a₁₁) copolymerisierbaren einfach ungesättigten Monomeren und
   a₁₃) 0,01 bis 10 Gew.-% mindestens eines mindestens bifunktionellen pfropfaktiven Monomeren
   und
a₂) 10 bis 50 Gew.-%, bezogen auf A), einer auf die Pfropfgrundlage gepfropften Hülle, aufgebaut aus
   a₂₁) 50 bis 95 Gew.-%, bezogen auf a₂), eines vinylaromatischen Monomeren,
   a₂₂) 5 bis 50 Gew.-%, bezogen auf a₂), polaren, copolymerisierbaren Monomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid, Vinylalkylether mit 1 bis 8 C-Atomen im Alkylrest,
C) 0 bis 50 Gew.-% faser- oder teilchenförmigen Füllstoffe und Verstärkungsmittel und
D) 0 bis 30 Gew.-% üblicher Zusatzstoffe und Verarbeitungshilfsmittel, wie sie erhalten werden wenn bei der Herstellung der Pfropfgrundlage a₁) die Monomeren a₁₃) in Form eines Konzentrationsgradienten zugegeben werden.

Darüber hinaus betrifft die Erfindung thermoplastische Formmassen, die neben den erfindungsgemäßen teilchenförmigen Pfropfpolymerisaten weitere Polymere enthalten.

Die Herstellung teilchenförmiger Pfropfpolymerisate aus einem kautschukelastischen Kern, d.h. einem Polymeren mit einer Glasübergangstemperatur von unter 0°C, und einer Pfropfhülle mit einer Glasübergangstemperatur von über 25°C (Glasübergangstemperatur ermittelt nach der DSC-Methode; K.H. Illers, Makromol. Chemie 127 (1969) S. 1) z.B. durch Emulsionspolymerisation, ist bekannt. Hierzu wird im allgemeinen zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage gepfropft wird. Dabei werden die Monomeren für die Pfropfhülle vorzugsweise so gewählt, daß diese mit dem zu modifizierenden Thermoplasten verträglich oder teilverträglich sind. Die Herstellung solcher Schlagzähmodifier ist seit langem bekannt und z.B. in der US-A-30 55 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen, z.B. Verwendung sogenannter "pfropfaktiver" ("graftlinking" bzw. "graft-enhancing") Monomere bei der Herstellung der Pfropfgrundlage (vgl. US-A-4 764 563, EP-A 231 933).

Nach einer in der EP-A 231 933 gegebenen Definition unterscheiden sich "pfropfaktive" Monomere von "vernetzend wirkenden" (cross-linking) Monomeren dadurch, daß pfropfaktive Monomere zwei oder mehr polymerisierbare Doppelbindungen enthalten, die sich in ihrer Reaktivität bezüglich der Polymerisation deutlich unterscheiden, während die Doppelbindungen vernetzend wirkender Monomerer annähernd gleiche Reaktivitäten aufweisen. Eine scharfe Unterscheidung ist in der Regel jedoch nicht möglich, weil auch die weniger reaktiven Doppelbindungen der pfropfaktiven Monomere bereits bei der Herstellung der Pfropfgrundlage teilweise reagieren und damit zu einer erhöhten Vernetzung der Pfropfgrundlage führen. Sie stehen damit für Pfropfreaktionen nicht mehr zur Verfügung. Andererseits läßt sich der Anteil der pfropfaktiven Monomeren an der Pfropfgrundlage nicht beliebig erhöhen, weil ihre vernetzende Wirkung zu einer Versprödung des als Pfropfgrundlage verwendeten elastomeren Polymerisats führt.

Zur Erzielung guter mechanischer Eigenschaften hat es sich als notwendig erwiesen, daß das als Pfropfgrundlage verwendete Polymerisat vernetzt ist. Bei Pfropfgrundlagen auf Basis von Acrylsäureestern werden zur Erreichung dieses Ziels vernetzende Monomere eingesetzt.

Hierzu wird die Polymerisation der Acrylsäureester in Gegenwart von 0,1 bis 5 Gew.-%, vorzugsweise von 0,2 bis 4 Gew.-%, bezogen auf das Gesamtgewicht der bei der Herstellung der Pfropfgrundlage eingesetzten Monomeren, copolymerisierbarer, polyfunktioneller Monomerer durchgeführt. Es eignen sich Monomere, die mindestens zwei zur Copolymerisation befähigte ethylenische Doppelbindungen enthalten. Beispiele sind Divinylbenzol, Diallylmaleat, Diallylfumarat, Diallylphthalat, Allylmethacrylat, Triallylcyanurat oder Triallylisocyanurat. Als besonders günstiges Monomer hat sich der Acrylsäureester des Tricyclodecenylalkohols erwiesen (vgl. DE-PS 12 60 135).

Um eine optimale Eigenschaftskombination zu erzielen, ist eine gesteuerte Vernetzung der Pfropfgrundlage bei gleichzeitig guter Anbindung der Pfropfhülle erforderlich. Eine einfache Erhöhung des Anteils an polyfunktionellen, pfropfaktiven Monomeren führt zwar im Regelfall zu einer guten Anbindung, aber gleichzeitig zu hohen Vernetzungsgraden der Pfropfgrundlage und damit einhergehend zu einer Verschlechterung der Zähigkeiten.

Der vorliegenden Erfindung lag daher die Aufgabe zugrunde, teilchenförmige Pfropfpolymerisate zur Verfügung zu stellen, die gute Zähigkeiten, insbesondere auch bei tiefen Temperaturen, aufweisen.

Diese Aufgabe wurde erfindungsgemäß durch die thermoplastischen Formmassen gemäß Anspruch 1 gelöst.

Die teilchenförmigen Pfropfpolymerisate A) in den erfindungsgemäßen Formmassen enthalten
a₁) 30 bis 90, vorzugsweise 35 bis 80 und insbesondere 40 bis 75 Gew.-% einer Pfropfgrundlage aufgebaut aus
a₁₁) 50 bis 99,4, vorzugsweise 55 bis 98 und insbesondere 60 bis 95 Gew.-%, bezogen auf b₁) eines Alkylacrylates mit 1 bis 30 C-Atomen im Alkylrest,
a₁₂) 0 bis 49,9, vorzugsweise 9 bis 45 und insbesondere 4 bis 40 Gew.-%, bezogen auf a₁) eines weiteren, mit a₁₁) copolymerisierbaren einfach ungesättigten Monomeren und
a₁₃) 0,01 bis 10 Gew.-% eines mindestens bifunktionellen, pfropfaktiven Monomeren.

Bevorzugte Monomere a₁₁) sind Alkylacrylate mit 2 bis 30 C-Atomen im Alkylrest, insbesondere Ethylacrylat, tert.-, iso- und n-Butylacrylat und 2-Ethylhexylacrylat, wovon die beiden letztgenannten besonders bevorzugt werden.

Als bevorzugte Monomere a₁₂) seien Isopren, Butadien, Styrol, Acrylnitril, Methacrylnitril und/oder Vinylalkylether mit 1 bis 8 C-Atomen im Alkylrest (z.B. Vinylmethylether, Vinylpropylether, Vinylethylether) oder Mischungen derselben genannt.

Als Komponente a₁₃) werden bei der Herstellung der Pfropfgrundlage 0,01 bis 10, vorzugsweise 0,1 bis 5 und insbesondere 0,2 bis 4 Gew.-% an mindestens bifunktionellen, pfropfaktiven Monomeren eingesetzt.

Unter "pfropfaktiv" sollen dabei solche Monomere verstanden werden, die mindestens zwei zur Copolymerisation befähigte Doppelbindungen mit unterschiedlicher Reaktivität aufweisen.

Beispielhaft für solche Monomere seien hier Allyl(meth)acrylate, Hydroxyalkyl(meth)acrylate und Dicyclopentadienyl(meth)acrylate genannt, wobei der Acrylsäureester des Tricylodecenylalkohols besonders bevorzugt wird.

Wesentliches Merkmal der erfindungsgemäßen Pfropfpolymerisate ist, daß bei der Herstellung der Pfropfgrundlage die Monomeren a₁₃) in Form eines Konzentrationsgradienten zugegeben werden, wobei besonders vorteilhaft die Zugabemenge pro Zeiteinheit im Verlauf der Umsetzung gesteigert wird. Die Art des Gradienten unterliegt dabei keiner besonderen Beschränkung, die Zunahme kann z.B. linear oder auch exponentiell mit der Zeit zunehmen.

Die pfropfaktiven Monomere können gemäß einer bevorzugten Ausführungsform auch in Mischung mit weiteren polyfunktionellen, vernetzend wirkenden Monomeren eingesetzt werden. Diese können ggf. in ähnlicher Weise wie die pfropfaktiven Monomere in Form eines Konzentrationsgradienten oder aber in an sich bekannter Weise dem Monomerengemisch zugegeben werden.

Beispielhaft für vernetzend wirkende bifunktionelle Monomere in der Komponente a₁₃) seien Divinylbenzol, Diallylmaleat, Diallylfumarat und Diallylphthalat, Vinylester von Dicarbonsäuren, Allyl- und Vinylether bifunktioneller Alkohole wie Ethylenglykoldivinylether, 1,4-Butandioldivinylether sowie Veresterungsprodukte von Acrylsäure oder Methacrylsäure mit bifunktionellen Alkoholen wie Ethylenglykoldi(meth)acrylat, 1,3-Propandioldi(meth)acrylat und 1,4-Butandioldi(meth)acrylat genannt.

Verfahren zur Herstellung von Polymeren a₁) sind dem Fachmann an sich bekannt und in der Literatur beschrieben, z.B. in der DE-PS 1 260 135. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel d₅₀) im Bereich von etwa 50 bis 700, insbesondere von 100 bis 600 nm aufweist.

Auf die Pfropfgrundlage a₁) ist eine Pfropfhülle a₂) gepfropft, die durch Copolymerisation von
a₂₁) 50 bis 95, vorzugsweise 60 bis 90 und insbesondere 65 bis 80 Gew.-% eines vinylaromatischen Monomeren, vorzugsweise Styrol oder substituierten Styrolen der allgemeinen Formel I 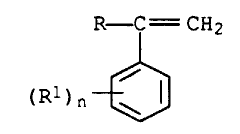 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, und
a₂₂) 5 bis 50, vorzugsweise 10 bis 40 und insbesondere 20 bis 35 Gew.-% polaren copolymerisierbaren Monomeren aus der Gruppe Acrylnitril, Methacrylnitril, Estern der Meth(acrylsäure) mit 1 bis 20 C-Atomen im Alkylrest, Maleinsäureanhydrid, (Meth)acrylamid, Vinylalkylethern mit 1-8 C-Atomen im Alkylrest und/oder Phenylmaleinimid oder deren Mischungen
erhalten wird.

Die Pfropfhülle a₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Das Pfropfmischpolymerisat (a₁ + a₂) weist im allgemeinen eine mittlere Teilchengröße von vorzugsweise 50 bis 1000 nm, insbesondere von 100 bis 700 nm (d₅₀-Gewichtsmittelwert) auf. Die Bedingungen bei der Herstellung des Elastomeren a₁) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925, sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße d₅₀ im Bereich von 50 bis 150 nm und ein zweites Polymer eine Teilchengröße von 200 bis 700 nm aufweist, wie sie in der bereits erwähnten US-A-5,196,480 beschrieben werden.

Gemäß einem weiteren Aspekt betrifft die vorliegende Erfindung thermoplastische Formmassen aus einem erfindungsgemäßen teilchenförmigen Pfropfpolymerisat und einem weiteren thermoplastischen Polymeren B) mit einer Glasübergangstemperatur von mehr als 20°C.

Dessen Anteil beträgt 30-90, vorzugsweise 30-85 und insbesondere 30-85 Gew.-%, bezogen auf das Gesamtgewicht der Formmasse.

Obwohl grundsätzlich jedes Polymerisat, welches eine solche Glasübergangstemperatur aufweist, mit der Komponente B abgemischt werden kann, haben sich Copolymerisate aus 50 bis 95, vorzugsweise 55 bis 90 und insbesondere 60 bis 85 Gew.-% vinylaromatischen Monomeren und 5 bis 50, vorzugsweise 10 bis 45 und besonders bevorzugt 15 bis 40 Gew.-% polaren copolymerisierbaren Monomeren aus der Gruppe Acrylnitril, Methacrylnitril, Ester der (Meth)acrylsäure mit 1 bis 4 C-Atomen in Alkylrest, Maleinsäureanhydrid, (Meth)acrylamid, Vinylalkylether mit 1 bis 8 C-Atomen im Alkylrest und oder Phenylmaleinimid oder deren Mischungen bewährt.

Als vinylaromatische Monomere haben sich Styrol und substituierte Styrole der allgemeinen Formel 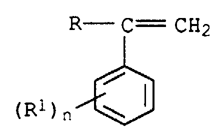 wobei R einen Alkylrest mit 1 bis 8 C-Atomen, ein Wasserstoffatom oder Halogen und R¹ Alkylreste mit 1-8 C-Atomen oder ein Halogenatom darstellen und n den Wert 0,1,2 oder 3 hat, bewährt.

Als Komponente C) können die erfindungsgemäßen Formmassen 0 bis 50, vorzugsweise 5 bis 45 und insbesondere 10 bis 40 Gew.-% faser- oder teilchenförmige Füllstoffe oder deren Mischungen enthalten.

Als Beispiele für Füllstoffe seien Kohlenstoff- oder Glasfasern in Form von Glasgeweben, Glasmatten oder Glasseidenrovings, Glaskugeln sowie Wollastonit genannt, besonders bevorzugt Glasfasern.

Bei der Verwendung von Glasfasern können diese zur besseren Verträglichkeit mit den Blendkomponenten mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt im Bereich von 0,05 bis 0,5 mm, vorzugsweise von 0,08 bis 0,45 mm (im Spritzgußteil).

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als Komponente D können in den erfindungsgemäßen thermoplastischen Formmassen bis zu 30, vorzugsweise 0,5 bis 10 Gew.-% üblichen Zusatzstoffe und Verarbeitungshilfsmittel enthalten sein.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen, wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie sterisch gehinderte Phenole, Hydrochinone, verschiedene substituierte Vertreter dieser Gruppen und Kombinationen derselben in Konzentrationen bis 1 Gew.-%, bezogen auf das Gewicht der Mischung.

Als Stabilisatoren kann man ebenfalls diejenigen, die allgemein zu Polymeren zugesetzt werden, in Mengen bis zu 2,0 Gew.-% auf die Mischung verwenden.

Beispiele für Stabilisatoren sind verschiedene substituierte Resorcine, Salicylate, Benzotriazole, Benzophenone, HALS-Stabilisatoren und dergleichen, wie sie unter den Handelsnamen Topanol®, Irganox® und Tinuvin® kommerziell erhältlich sind.

Geeignete Gleit- und Entformungsmittel, die z.B. in Mengen bis zu 7 Gew.-% der thermoplastischen Masse zugesetzt werden, sind Stearinsäuren, Stearylalkohol, Stearinsäureester und -amide.

Eine weiterer möglicher Zusatzstoff sind Siliconöle, vorzugsweise in Mengen von 0,05 bis 1 Gew.-%.

Ferner können zugesetzt werden organische Farbstoffe, wie Nigrosin, Pigmente, z.B. Titandioxid, Cadmiumsulfid, Cadmium-sulfid-selenid, Phthalocyanine, Ultramarinblau oder Ruß.

Die Abmischung der Komponenten A), ggf. B) und gegebenenfalls C) und/oder D) erfolgt in der Regel nach an sich bekannten und in der Literatur beschriebenen Verfahren in der Schmelze, vorzugsweise auf Extrudern.

Die erfindungsgemäßen Formmassen weisen gute Zähigkeiten bei tiefer Temperatur in Kombination mit guter Witterungsbeständigkeit auf. Sie eignen sich besonders gut zur Herstellung von Automobilteilen, Haushaltsgeräten, Booten, Verkehrsschildern und generell jeglicher Art von Formkörpern, die Licht und wechselnden Temperaturen unter Lufteinfluß ausgesetzt sind.

### Beispiel 1

1.1 Herstellung des Pfropfmischpolymerisats (B)
   160 g Acrylsäurebutylester wurden in 1500 g Wasser unter Zusatz von 5 g des Kaliumsalzes einer C₁₂- bis C₁₈-Paraffin-sulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden 820 g Acrylsäurebutylester zudosiert. Als pfropfaktives Monomer wurden 20 g Acrylsäureester des Tricyclodecenylalkohols eingesetzt, die so zudosiert wurden, daß parallel zur Dosierung des Acrylsäurebutylesters eine lineare Zunahme der Dosiermenge des Acrylsäureesters des Tricyclodecenylalkohols über 3 Stunden resultierte. Nach Beendigung der Monomerzugabe wurde die Emulsion noch eine Stunde bei 65°C gehalten.
1.2. Herstellung der teilchenförmigen Pfropfpolymerisate
   2100 g der nach obiger Vorschrift (1.1.) hergestellten Emulsion wurden mit 1150 g Wasser sowie mit 2,7 g Kaliumperoxodisulfat gemischt und unter Rühren auf 65°C erwärmt. Nach Erreichen der Reaktionstemperatur wurden im Lauf von 3 Stunden ein Monomerengemisch aus 495 g Styrol und 165 g Acrylnitril zudosiert. Nach Beendigung der Zugabe wurde die Emulsion noch 2 Stunden bei 65°C gehalten. Das Pfropfcopolymerisat besitzt eine mittlere Teilchengröße von 95 nm. Das Pfropfpolymerisat wurde mittels Calciumchloridlösung bei 95°C aus der Emulsion gefällt, mit Wasser gewaschen und im warmen Luftstrom getrocknet.

### Beispiele 2

2.1 Herstellung der Pfropfgrundlage
   Die Herstellung der Pfropfgrundlage erfolgte wie unter 1.1. beschrieben. Der Acrylsäureester des Tricyclodecenylalkohols wurde jedoch so zugegeben, daß die Zulaufmenge y in Abhängigkeit von der Zeit t einer Funktion der Form y = a·t² entspricht, wobei a eine Konstante ist, die sich aus der Gesamtmenge des Acrylsäureesters des Tricyclodecenylalkohols ergibt. Die Gesamtzulaufzeit betrug 3 Stunden.
2.2 Herstellung der Pfropfhülle
   Die Herstellung der Pfropfhülle erfolgte wie unter 1.2. beschrieben.

### Beispiel 3

3.1 Herstellung der Pfropfgrundlage
   Die Herstellung der Pfropfgrundlage erfolgte wie unter 1.1. beschrieben. Der Acrylsäureester des Tricyclodecenylalkohols wurde als gleichmäßiger Zulauf jedoch nur während der dritten Stunde Zulauf des Acrylsäurebutylesters zudosiert.
3.2 Herstellung der Pfropfhülle
   Die Herstellung der Pfropfhülle erfolgte wie unter 1.2. beschrieben.

### Beispiel 4

4.1 Herstellung der Pfropfgrundlage
   Die Herstellung der Pfropfgrundlage erfolgte wie unter 1.1. beschrieben. Zusätzlich wurden jedoch gleichmäßig über die 3 Stunden Zutropfzeit des Acrylsäurebutylesters verteilt 10 g Butandioldiacrylat zugegeben.
4.2 Herstellung der Pfropfhülle
   Die Herstellung der Pfropfhülle erfolgte wie unter 1.2. beschrieben.

### Beispiel 5

5.1 Herstellung der Pfropfgrundlage
   Die Herstellung der Pfropfgrundlage erfolgte wie unter 1.1. beschrieben. Zusätzlich wurden jedoch gleichmäßig über die 3 Stunden Zutropfzeit des Acrylsäurebutylesters verteilt 10 g Diallylphthalat zugegeben.
5.2 Herstellung der Pfropfgrundlage
   Die Herstellung der Pfropfgrundlage erfolgte wie unter 1.1. beschrieben.

### Beispiel 6

6.1 Herstellung der Pfropfgrundlage
   Die Herstellung der Pfropfgrundlage erfolgte wie unter 2.1. beschrieben. Der Anteil am Acrylsäureester des Tricyclodecenylalkohols betrug jedoch 40 g.
6.2 Herstellung der Pfropfgrundlage
   Die Herstellung der Pfropfgrundlage erfolgte wie unter 1.2. beschrieben.

### Vergleichsbeispiel 1

V1.1Herstellung der Pfropfgrundlage
   156,8 g Acrylsäurebutylester und 3,2 g Acrylsäureester des Tricyclodecenylalkohols wurden in 1500 g Wasser unter Zusatz von 5 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 823,2 g Acrylsäurebutylester und 16,8 g Acrylsäureester des Tricyclodecenylalkohols zudosiert. Nach Beendigung der Monomerzugabe wurde die Emulsion noch eine Stunde bei 65°C gehalten.
V1.2Herstellung der Pfropfgrundlage
   Die Herstellung der Pfropfgrundlage erfolgte wie unter 1.2. beschrieben.

### Vergleichsbeispiel 2

V2.1Herstellung der Pfropfgrundlage
   156,8 g Acrylsäurebutylester und 6,4 g Acrylsäureester des Tricyclodecenylalkohols wurden in 1500 g Wasser unter Zusatz von 5 g des Kaliumsalzes einer C₁₂- bis C₁₈-ParaffinsulfonSäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 806,4 g Acrylsäurebutylester und 33,6 g Acrylsäureester des Tricyclodecenylalkohols zudosiert. Nach Beendigung der Monomerzugabe wurde die Emulsion noch eine Stunde bei 65°C gehalten.
V2.2Herstellung der Pfropfgrundlage
   Die Herstellung der Pfropfgrundlage erfolgte wie unter 1.2. beschrieben.

### Beispiele 8-15

Zur Herstellung von erfindungsgemäßen Pfropfmischpolymerisaten wurden die teilchenförmigen Pfropfmischpolymerisate mit einem Styrol/Acrylnitril Copolymerisat (Komponente B) mit einem Acrylnitril-Gehalt von 35 Gew.-% und einer Viskositätszahl von 80 ml/g (best. an einer 0,5 gew.-%igen Lösung in Dimethylformamid bei 23°C) abgemischt. Zu diesem Zweck wurden die ausgefällten und getrockneten teilchenförmigen Pfropfpolymerisate mit dem Copolymeren auf einem Extruder bei 260°C gemischt, extrudiert und granuliert. Aus dem Granulat wurden im Spritzguß Prüfkörper zur Bestimmung der Schlagzähigkeit nach DIN 53 453 hergestellt und diese bei -20°C bestimmt. Der Gehalt an SAN-Copolymer betrug in allen Beispielen 29 Gew.-%.

Die Ergebnisse sind der Tabelle zu entnehmen.

| Beispiel | Pfropfmischpolymerisat aus Beispiel | aₙ [kJ/m²] -20°C |
|---|---|---|
| 8 | 1 | 72 |
| 9 | 2 | 91 |
| 10 | 3 | 98 |
| 11 | 4 | 68 |
| 12 | 5 | 75 |
| 13 | 6 | 113 |
| 14V | V1 | 50 |
| 15V | V2 | 41 |
| V = Vergleichsbeispiel | | |

## Patentansprüche

1. Thermoplastische Formmassen aufgebaut aus
a₁) 30 bis 90 Gew.-%, bezogen auf A), einer Pfropfgrundlage mit einer Glasübergangstemperatur von weniger als 0°C auf der Basis von
a₁₁) 50 bis 99,94Gew.-%,bezogen auf a₁), mindestens eines Alkylacrylats mit 1 bis 30 C-Atomen im Alkylrest,
a₁₂) 0 bis 49,9 Gew.-%, bezogen auf ai), eines weiteren, mit a₁₁) copolymerisierbaren einfach ungesättigten Monomeren und
a₁₃) 0,01 bis 10 Gew.-% mindestens eines mindestens bifunktionellen pfropfaktiven Monomeren
und
a₂) 10 bis 70 Gew.-%, bezogen auf A), einer auf die Pfropfgrundlage gepfropften Hülle, aufgebaut aus
a₂₁) 50 bis 95 Gew.-%, bezogen auf a₂₁), eines vinylaromatischen Monomeren,
a₂₂) 5 bis 50 Gew.-%, bezogen auf a₂) polaren, copolymerisierbaren Monomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest,
C) 0 bis 50 Gew.-% faser- oder teilchenförmiger Füllstoffe und Verstärkungsmittel und
D) 0 bis Gew.-% üblicher Zusatzstoffe und Verarbeitungshilfsmittel,
wie sie erhalten werden, wenn bei der Herstellung der Pfropfgrundlage a₁) die Monomeren a₁₃₎ in Form eines Konzentrationsgradienten zugegeben werden.

2. Thermoplastische Formmassen nach Anspruch 1, enthaltend als Komponente B) ein Copolymerisat aus
b₁) 50 bis 90 Gew.-% Styrol und/oder α-Methylstyrol und
b₂₁) 10 bis 50 Gew.-% (Meth)acrylnitril und/oder Methyl(meth)acrylat
b₂₂) 0 bis 40 Gew.-% andere Monomere b₂).

3. Verwendung der thermoplastischen Formmassen gemäß Anspruch 1 bis 2 zur Herstellung von Folien und Formkörpern.

## Claims

1. A thermoplastic molding material composed of
a₁) from 30 to 90% by weight, based on A), of a grafting base having a glass transition temperature of less than 0°C and based on
a₁₁) from 50 to 99.94% by weight, based on a₁), of at least one alkyl acrylate where the alkyl radical is of 1 to 30 carbon atoms,
a₁₂) from 0 to 49.9% by weight, based on a₁), of a further, monounsaturated monomer copolymerizable with all) and
a₁₃) from 0.01 to 10% by weight of at least one graft-linking monomer which is at least bifunctional
and
a₂) from 10 to 70% by weight, based on A), of a shell grafted onto the grafting base and composed of
a₂₁) from 50 to 95% by weight, based on a₂), of a vinylaromatic monomer and
a₂₂) from 5 to 50% by weight, based on a₂), of polar, copolymerizable monomers selected from the group consisting of acrylonitrile, methacrylonitrile, esters of (meth)acrylic acid where the alkyl radical is of 1 to 20 carbon atoms, maleic anhydride, (meth)acrylamide and vinyl alkyl ethers where the alkyl radical is or 1 to 8 carbon atoms,
C) from 0 to 50% by weight of fibrous or particulate fillers and reinforcing materials and
D) from 0 to 30% by weight of conventional additives and processing assistants,
as obtained if the monomers a₁₃) are added in the form of a concentration gradient during the preparation of the grafting base al).

2. A thermoplastic molding material as claimed in claim 1, containing, as component B), a copolymer of
b₁) from 50 to 90% by weight of styrene or α-methylstyrene and
b₂₁) from 10 to 50% by weight of (meth)acrylonitrile or methyl (meth)acrylate
b₂₂) from 0 to 40% by weight of other monomers b₂).

3. The use of a thermoplastic molding material as claimed in claim 1 or 2 for the production of films and moldings.

## Revendications

1. Masses à mouler thermoplastiques constituées de
a₁) 30 à 90% en poids, par rapport à A), d'une base de greffage présentant une température de transition vitreuse inférieure à 0°C, à base de
a₁₁) 50 à 99,94% en poids, par rapport à a₁), d'au moins un acrylate d'alkyle comportant 1 à 30 atomes de C dans le radical alkyle,
a₁₂) 0 à 49,9% en poids, par rapport à a₁), d'un autre monomère insaturé une fois, copolymérisable avec a₁₁), et
a₁₃) 0,01 à 10% en poids d'au moins un monomère actif quant au greffage au moins bifonctionnel,
et de
a₂) 10 à 70% en poids, par rapport à A), d'une enveloppe greffée sur la base de greffage, constituée de
a ₂₁) 50 à 95% en poids, par rapport a₂), d'un monomère vinyl-aromatique,
a₂₂) 5 à 50% en poids, par rapport à a₂), de monomères copolymérisables, polaires, du groupe de l'acrylonitrile, du méthacrylonitrile, des esters d'acide acrylique et méthacrylique comportant de 1 à 20 atomes de C dans le radical alkyle, de l'anhydride maléique, du méthacrylamide, de l'acrylamide et/ou des éthers vinylalkyliques comportant 1 à 8 atomes de C dans le radical alkyle,
C) 0 à 50% en poids de matières de remplissage et d'agents de renforcement en forme de fibres ou de particules,
D) 0 à 30% en poids d'additifs et d'agents auxiliaires de traitement courants,
telles qu'obtenues lorsque, lors de la préparation de la base de greffage a₁), on ajoute les monomères a₁₃) sous la forme d'un gradient de concentration.

2. Masses à mouler thermoplastiques suivant la revendication 1, contenant comme composant B) un copolymère de
b₁) 50 à 90% en poids de styrène et/ou d'α-méthylstyrène, et
b₂₁) 10à 50% en poids d'acrylonitrile ou de méthacrylonitrile et/ou d'acrylate de méthyle ou de méthacrylate de méthyle,
b₂₂) 0 à 40% en poids d'autres monomères b₂).

3. Utilisation des masses à mouler thermoplastiques suivant l'une des revendications 1 et 2, pour la préparation de feuilles et de corps moulés.
